Europäisches Patentamt

European Patent Office

Office européen des brevets

(19)

(11) Publication number: **0 354 438 B1**

## EUROPEAN PATENT SPECIFICATION

(12)

(45) Date of publication of patent specification: **16.12.92**

(51) Int. Cl.⁵: **B60G 17/04**, B60G 17/056, B60G 17/033

(21) Application number: **89114098.0**

(22) Date of filing: **31.07.89**

(54) **Constant-level pneumatic suspension for motor vehicles.**

(30) Priority: **02.08.88 IT 6773388**

(43) Date of publication of application:
**14.02.90 Bulletin 90/07**

(45) Publication of the grant of the patent:
**16.12.92 Bulletin 92/51**

(84) Designated Contracting States:
**DE ES FR GB IT NL SE**

(56) References cited:
**FR-A- 1 180 041
FR-A- 2 142 065
US-A- 2 687 311
US-A- 2 787 475
US-A- 4 733 876**

**SAE-PAPER 840342, 1985, pages 2741-2753,
Society of Automotive Engineers, Inc., Nar-
rendale PA, US; B.K. CHANCE: "1984 Con-
tinental mark VII/Lincoln continental
electonically-controlled air suspension
(EAS) system**

(73) Proprietor: **IVECO FIAT S.p.A.
Via Puglia 35
I-10156 Torino(IT)**

(72) Inventor: **Benedetto, Carlo
Strada Eremo 33/3
I-10020 Pecetto Torinese Torino(IT)**

(74) Representative: **Bosotti, Luciano et al
c/o Jacobacci-Casetta & Perani S.p.A. Via
Alfieri, 17
I-10121 Torino(IT)**

## Description

The present invention relates to a constant-level pneumatic suspension for vehicles, particularly commercial vehicles and buses, including a pneumatic circuit for connecting a compressed-air supply to the air springs of the suspension, regulating valve means associated with the pneumatic circuit for controlling the admission and discharge of compressed air to and from these springs as a result of variations in the load on the vehicle, on/off solenoid valves interposed between the regulating valves and the air springs for isolating the air springs from the pneumatic circuit when the vehicle exceeds a predetermined speed.

A pneumatic suspension of the above type is known from US-A-2.787.475. This suspension has the disadvantage of a consumption of compressed air due to continual pressurization/depressurization of the pneumatic circuit comprised between the on/off solenoid valve and the regulating valve.

The object of the present invention is to provide a pneumatic suspension of the type specified at the beginning of the specification, which enables this disadvantage to be overcome simply and economically.

According to the invention, this object is achieved by virtue of the fact that the pneumatic suspension includes auxiliary on/off solenoid valves interposed between the compressed air supply and the regulating valve means and operated in synchronism with the aforesaid on/off solenoid valve to isolate the portions of the pneumatic circuit between the latter and the auxiliary on/off solenoid valves.

Thus, in addition to the consumption of air by the springs, this also avoids the consumption of air due to the continual pressurization/depressurization of the portions of pipe between the levelling valve and the on/off solenoid valve, bringing the compressed air consumption of the pneumatic suspension during travel of the vehicle to almost zero (save for any losses in the pneumatic circuit).

Further advantages and characteristics of the suspension according to the invention will become clear from the detailed description which follows, purely by way of non-limiting example, with reference to the appended drawings, in which:

Figure 1 is a schematic perspective view of a pneumatic suspension according to the invention,
Figure 2 shows the suspension of Figure 1 diagrammatically,
Figure 3 is a diagram of a second embodiment of the invention,
Figure 4 is a sectional view of an integrated levelling solenoid valve adapted to form part of the suspension of Figures 1 and 2, and

Figure 5 is a sectional view of a second type of integrated levelling solenoid valve arranged to form part of the suspension of Figures 1 and 2.

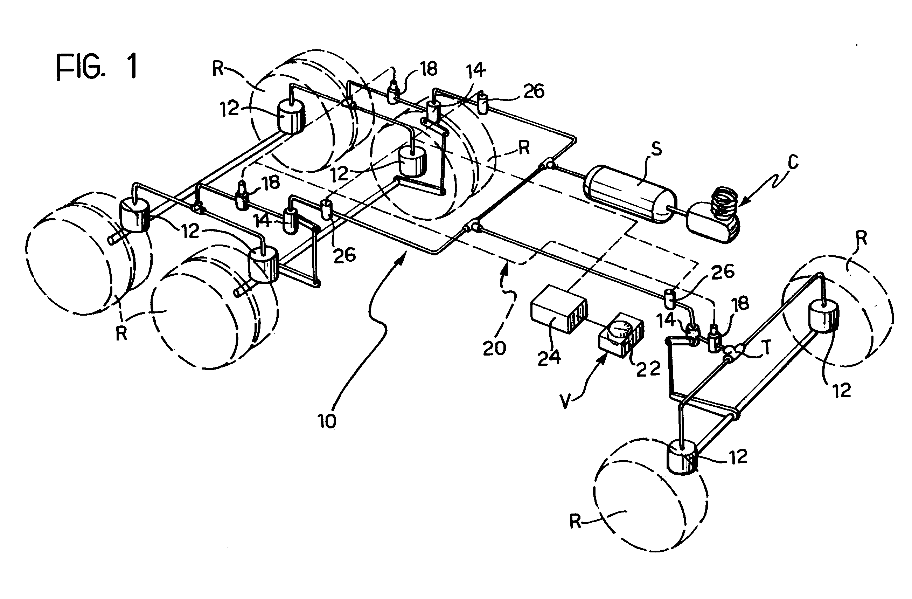

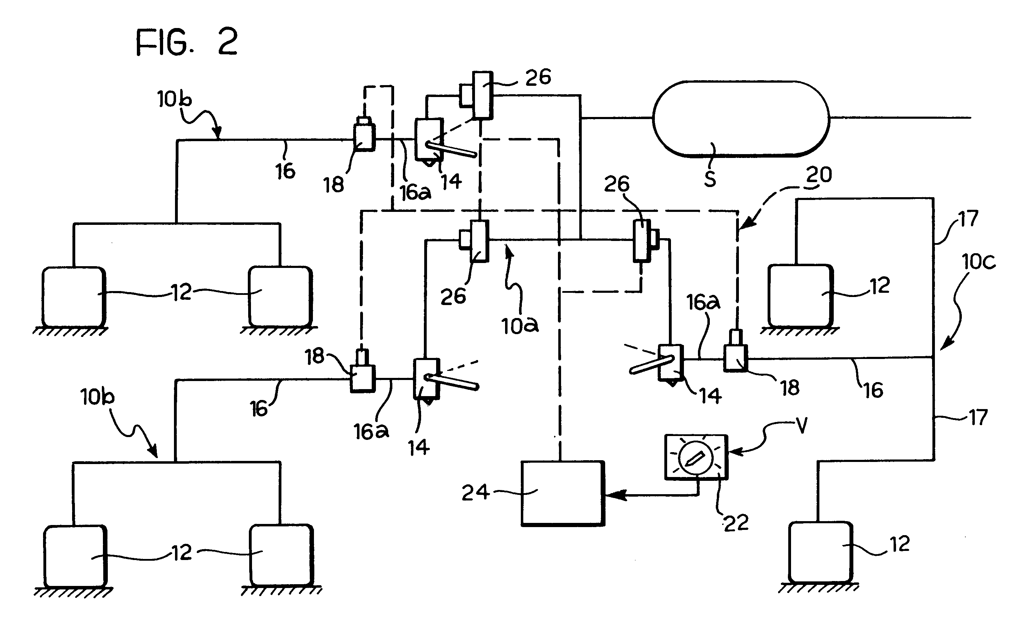

With reference to Figures 1 and 2, a pneumatic circuit for a constant-level pneumatic suspension for buses or commercial vehicles, generally indicated 10, is arranged to supply air springs 12 associated with wheels R of the vehicle and is pressurised by means of a compressed-air reservoir S in its turn supplied by a compressor C. The pneumatic circuit 10 has a central portion 10a connected directly to the reservoir S and branch portions 10b and 10c associated with the pairs of rear wheels and with the front axle of the vehicle, respectively.

Levelling valves 14 of known type are interposed between the central portion 10a of the pneumatic circuit 10 and the branch portions 10b, 10c and are arranged to modulate the pressure of the air springs 12 in dependence on the conditions of loading of the vehicle.

On/off solenoid valves 18 controlled by an electrical circuit 20 are mounted in pipes 16 connecting the levelling valves 14 and the air springs 12. The electrical circuit includes a tachometric switch 22 associated with the tachometer V of the vehicle, and a central electronic control unit 24 whose function will become clearer in the description below.

When the vehicle is stationary, the solenoid valves 18 are open and enable the pressure of the air springs 12 to be regulated in order to keep the attitude of the vehicle constant (one is considering typical conditions with the bus stationary). When the vehicle starts to move, the solenoid valves 18 are activated at a predetermined speed imposed by means of the tachometric switch 22 and isolate the air springs 12 from the central portion 10a of the pneumatic circuit 10.

In order to eliminate the consumption of compressed air due to the continual pressurization/depressurization of the portion of pipe, indicated 16a, between each levelling valve 14 and each on/off solenoid valve 18, auxiliary on/off valves 26 are interposed between the levelling valves 14 and the compressed-air reservoir S, such valves 26 being linked to the electric circuit 20. The simultaneous activation of the solenoid valves 18 and 26 by the tachometric switch 22 isolates both the air springs 12 and the levelling valves 14 completely from the remaining part of the pneumatic circuit.

In the case of vehicles which do not stop repeatedly (commercial vehicles or intercity buses), there is provision for the use of a timer associated with the central electronic control unit 24 and arranged to deactivate the solenoid valves 18 and the auxiliary solenoid valves 26 to allow the periodic recovery of any losses of compressed air which could occur in the pneumatic circuit downstream of the on/off solenoid valves during travel.

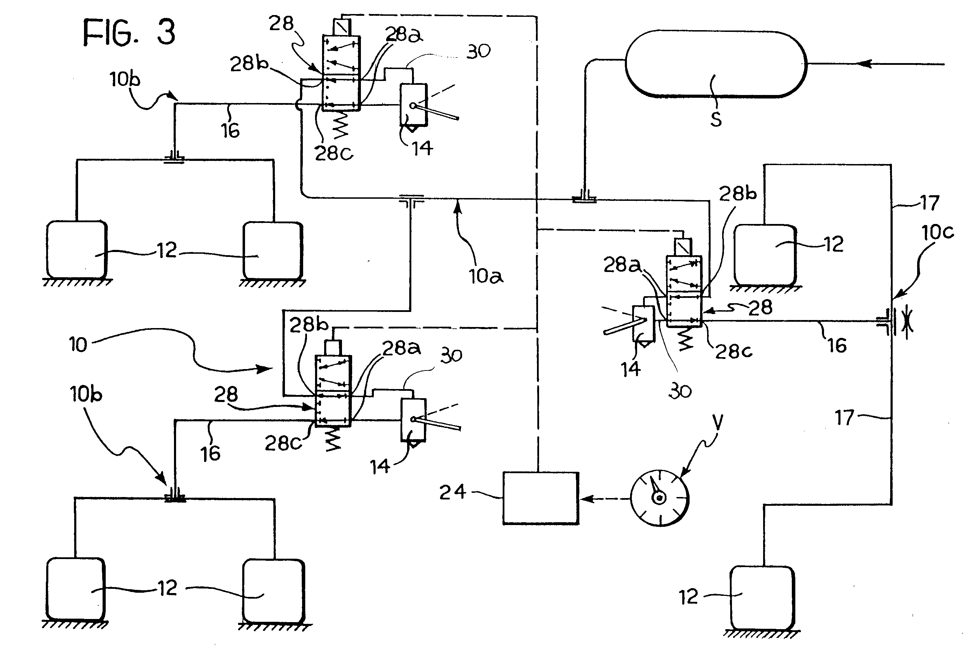

Figure 3 illustrates schematically a suspension which, according to a second embodiment, enables each pair constituted by an on/off solenoid valve 18 and an auxiliary on/off solenoid valve 26 to be combined in a single four-way pneumatic solenoid valve 28 having two first connectors 28a for connection to a closed-loop pipeline 30 in which the levelling valve 14 is mounted, and two second connectors 28b and 28c for connection to the compressed-air reservoir S and to the air springs 12, respectively.

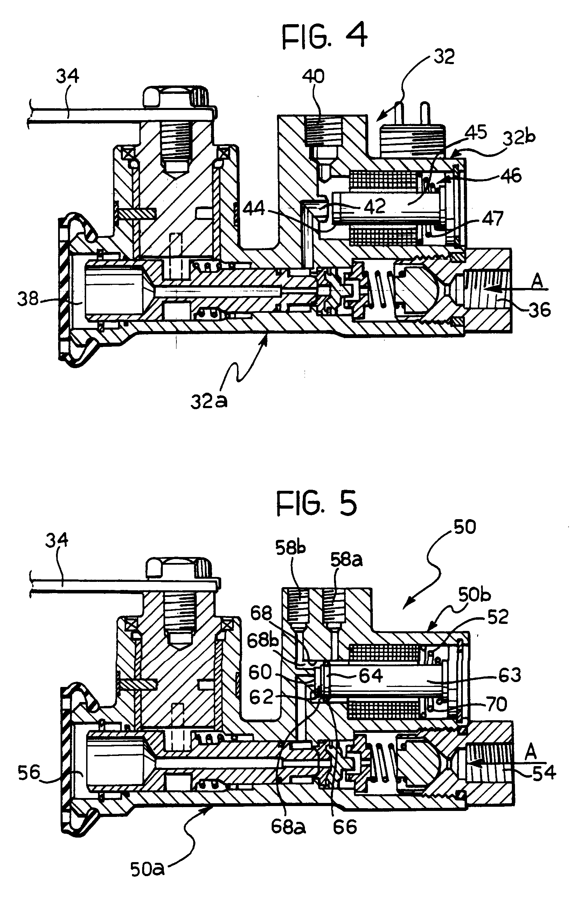

Figure 4 illustrates a levelling valve 32 adapted for installation in a circuit of the type illustrated in Figure 2. The solenoid valve 32 has the advantage of combining the levelling valve and the on/off solenoid valve in a single body. This has a portion 32a which corresponds essentially to the known levelling valves and is operated by a lever 34 connected, for example, to an arm of the suspension. A second portion 32b of the levelling solenoid valve 32 is integral with the first portion 32a and enables the advantages described above to be achieved. The valve 32 includes a first connector 36 connected to the reservoir S, a second discharge connector 38, and a third connector 40 connected to the air springs 12. The portion 32b of the solenoid valve 32 has a valve seat 42 for cooperating with an obturator 44 constituted by the end of a rod 45 of an electromagnet 46. The rod 45 may take up a first, rest position (illustrated in Figure 4) under the action of a compression spring 47 and a second, operative position in which the obturator 44 cooperates with the seat 42 to isolate the connector 40 communicating with the air springs from the remaining portion 32a of the valve 32 which, being of known type, will not be described in detail.

In the embodiments illustrated in Figures 2 and 4, which includes three levelling valves, a T-connector is arranged on the axle controlled by one of these levelling valves 14, in known manner, in order to connect the main pipe 16 with two branch pipes 17. According to the conventional technique, in order to avoid a "transfer" of pressure from one air spring to the other during travel around bends, the T-connector has a calibrated orifice for delaying or minimising the influence of the compressed-air flow from a spring which is outermost on the bend to a spring which is innermost on the bend. In each case, after cornering, a certain period is needed for the vehicle to regain its attitude as a result of the equalization of the pressure in the air springs.

A further embodiment of the invention illustrated in Figure 5 has the additional object of preventing the said "transfer" of air from one spring to the other and thus of enabling the vehicle to regain its attitude more quickly when travelling along a straight line after the bend. According to this further embodiment, an integrated levelling valve 50 is located in correspondence with the connector between the main pipe 16 and the branch pipe 17 connected to the air springs 12. The valve 50 has a first portion 50a entirely corresponding to the known levelling valves and a second portion 50b with an electromagnet 52 connected to the electrical circuit 20 of the suspension. The valve 50 has a first connector 54 communicating with the compressed-air reservoir S, a second discharge connector 56, and two third connectors 58a and 58b connected respectively to a right-hand spring and a left-hand spring of an axle of the suspension.

The second portion 50b of the valve 50 has a seat 60 for cooperating with an obturator 62 constituted by the end of a rod 63 of the electromagnet 52. Adjacent the obturator 62, the rod 63 has an annular groove 64 which houses an annular sealing washer 66, for example an O-ring, adapted to slide sealingly on a cylindrical wall 68 coaxial with the seat 60. Two apertures 68a and 68b which are spaced apart axially and which communicate with the two third connectors 58a and 58b are disposed in correspondence with the cylindrical wall 68.

In the operative configuration of the solenoid valve associated with the portion 50b of the valve 50 (the configuration illustrated in Figure 6), the obturator 62 is urged against the seat 60 so as to prevent communication between the third connectors 58a and 58b and the portion 50a of the valve. In this configuration, the washer 66 also prevents communication between the connectors 58a and 58b, isolating the right-hand and left-hand air springs of one axle of the suspension from each other.

During de-energisation of the electromagnet 52 by the electrical circuit 20, a compression spring 70 makes the rod 63 move so as to become disengaged from the seat 60 and brings the sealing washer 66 into a position such as to allow communication between the connectors 58a and 58b, enabling the regulating operation of the portion 50a of the valve 50.

## Claims

1. A constant-level pneumatic suspension for vehicles, particularly commercial vehicles and buses, including a pneumatic circuit for connecting a compressed-air supply(s) to the air springs (12) of the suspension, regulating valve means (14) associated with the pneumatic circuit for controlling the admission and discharge of compressed air to or from these springs (12) as a result of variations in the load on the vehicle, on/off solenoid valves (18) interposed between the regulating valves (14) and the air springs (12) for isolating the air springs (12) from the pneumatic circuit (10a) when the vehicle exceeds a predetermined speed characterised in that it further includes auxiliary on/off solenoid valves (26) interposed between the compressed-air supply (S) and the regulating valve means (14) and operated in synchronism with the on/off solenoid valves (18) to isolate the portions of the pneumatic circuit (16a) between the latter (18) and the auxiliary on/off solenoid valves (26).

2. A suspension according to Claim 1, characterised in that the on/off solenoid valves (18) and the auxiliary on/off solenoid valves (26) are combined in pairs in a single four-way solenoid valve (28).

3. A suspension according to Claim 1, characterised in that the pneumatic circuit includes at least one pair of corresponding right- and left-hand air springs (12), a pair of branch pipes (17) communicating with the air springs (12) and connected to a single main pipe (16) for the connection to said compressed-air supply (s), whereby, for the pair of springs (12), the suspension includes a levelling valve (50) having a first connector (54) connected to the main pipe (16) , a second discharge connector (56), and a pair of third connectors (58a, 58b) each connected to the respective branch pipe (17), the levelling valve (50) including a first portion (50a) for modulating the pressure in the third connectors (58a, 58b) in dependence on the load on the vehicle and a second portion (50b) including a seat (60) and a corresponding obturator (62) for enabling communication between the branch pipes (17) and the first portion (50a) of the solenoid valve in a first position and, in a second position, for cutting off the air flow between the third connectors (58a, 58b) and the first and second connectors (54, 56) and for isolating the third connectors (58a, 58b) simultaneously from each other.

4. A suspension according to Claim 3, characterised in that the second portion (50b) of the levelling valve (50) includes a seat (60) for the obturator (62), which is coaxial with a cylindrical wall (68) with axially spaced apertures (68a, 68b) communicating with the branch pipes (17), the obturator (62) having an annular sealed portion (66) for location, in the second position of the obturator (62), between the apertures (68a, 68b) in order to isolate the branch pipes (17) from each other.

5. A suspension according to any one of the preceeding claims, characterised in that control means are associated to the on/off solenoid valves, which include a timer (24) for the periodic deactivation of the on/off solenoid valves (18, 26, 28, 32b, 50b) when the vehicle is moving.

**Patentansprüche**

1. Luft-Federung mit konstanter Lage für Fahrzeuge, insbesondere kommerzielle Fahrzeuge und Busse, die einen Druckluftkreis zum Verbinden einer Druckluftversorgungseinrichtung (S) mit Luftfedern (12) der Federung, eine Regelventileinrichtung (14), die dem Druckluftkreis zugeordnet ist, zum Regeln des Zuführens und Abführens von Druckluft zu oder von den Federn (12) als Ergebnis von Änderungen der Last des Fahrzeugs und Ein/Aus-Elektromagnetventile (18) enthält, die zwischen den Regelventilen (14) und den Luftfedern (12) angeordnet sind, zum Trennen der Luftfedern (12) von dem Druckluftkreis (10a), wenn das Fahrzeug eine vorbestimmte Geschwindigkeit überschreitet, dadurch **gekennzeichnet,** daß sie ferner Hilfs-Ein/Aus-Elektromagnetventile (26) enthält, die zwischen der Druckluftversorgungseinrichtung (S) und der Regelventileinrichtung (14) angeordnet sind und in Synchronismus mit den Ein/Aus-Elektromagnetventilen (18) betätigt werden, um die Teile des Druckluftkreises (16a) zwischen letzteren (18) und den Hilfs-Ein/Aus-Elektromagnetventilen (26) zu trennen.

2. Federung nach Anspruch 1, dadurch **gekennzeichnet** daß die Ein/Aus-Elektromagnetventile (18) und die Hilfs-Ein/Aus-Elektromagnetventile (26) zu Paaren in einem einzigen Vierwege-Elektromagnetventil (28) kombiniert sind.

3. Federung nach Anspruch 1, dadurch **gekennzeichnet,** daß der Druckluftkreis zumindest ein Paar von entsprechenden rechten und linken Luft-Federn (12) enthält, wobei ein Paar von Abzweigungsrohren (17) mit den Luftfedern (12) kommunizieren und mit einem einzigen Hauptrohr (16) für die Verbindung mit der Druckluftversorgungseinrichtung (S) verbunden sind und wobei die Federung für das Paar von Federn (12) ein Ausgleichsventil (50) enthält, das ein erstes Verbindungsteil (54), welches mit dem Hauptrohr (16) verbunden ist, ein zweites Abführungs-Verbindungsteil (56) und ein Paar von dritten Verbindungsteilen (58a, 58b) hat, wovon jedes mit dem betreffenden Abzweigungsrohr (17) verbunden ist, welches Ausgleichsventil (50) einen ersten Teil (50a) zum Modulieren des Drucks in den dritten Verbindungsteilen (58a, 58b) in Abhängigkeit von der Last des Fahrzeugs und einen zweiten Teil (50b) enthält, der einen Sitz (60) und einen entsprechenden Verschlußteil (62) zum Freigeben des Kommunizierens zwischen den Abzweigungsrohren (17) und dem ersten Teil (50a) des Elektromagnetventils in einer ersten Stellung und zum Unterbrechen der Luftströmung zwischen den dritten Verbindungsteilen (58a, 58b) und dem ersten und dem zweiten Verbindungsteilen (54, 56) und zum gleichzeitigen Trennen der dritten Verbindungsteile (58a, 58b) voneinander in einer zweiten Stellung enthält.

4. Federung nach Anspruch 3, dadurch **gekennzeichnet,** daß der zweite Teil (50b) des Ausgleichsventils (50) einen Sitz (60) für den Verschlußteil (62) enthält, der koaxial mit einer zylindrischen Wand (68) angeordnet ist, wobei axial einen Abstand voneinander aufweisenden Öffnungen (68a, 68b) mit den Abzweigungsrohren (17) kommunizieren und wobei der Verschlußteil (62) einen ringförmigen luftdichten Teil (66) zur Positionierung in der zweiten Stellung des Verschlußteils (62) zwischen den Öffnungen (68a, 68b), um die Verzweigungsrohre (17) voneinander zu trennen, hat.

5. Federung nach einem der vorhergehenden Ansprüche, dadurch **gekennzeichnet,** daß den Ein/Aus-Elektromagnetventilen Regelmittel zugeordnet sind, die einen Zeitschalter (24) für die periodische Deaktivierung der Ein/Aus-Elektromagnetventile (18, 26, 28, 32b, 50b), wenn sich das Fahrzeug bewegt, enthalten.

**Revendications**

1. Suspension pneumatique à assiette constante pour véhicules, notamment pour véhicules utilitaires et autobus, comprenant un circuit pneumatique pour relier une alimentation (S) en air comprimé aux ressorts pneumatiques (12) de la suspension ; des moyens (14) à valves de régulation, associés au circuit pneumatique pour commander l'admission d'air comprimé dans ces ressorts (12) et son évacuation desdits ressorts, suite à des variations intervenant dans la charge imposée au véhicule ; des électrovannes (18) de mise en fonction/hors fonction, interposées entre les valves de régulation (14) et les ressorts pneumatiques (12) pour isoler les ressorts pneumatiques (12) par rapport au circuit pneumatique (10a) lorsque le véhicule excède une vitesse prédéterminée, caractérisée par le fait qu'elle présente, en outre, des électrovannes auxiliaires (26) de mise en fonction/hors fonction, interposées entre l'alimentation (S) en air comprimé et les moyens (14) à valves de régulation, et actionnées en synchronisme avec les électrovannes (18) de mise en fonction/hors fonction, afin d'isoler les segments (16a) du circuit pneumatique entre ces dernières (18) et les électrovannes auxiliaires (26) de mise en fonction/hors fonction.

2. Suspension selon la revendication 1, caractérisée par le fait que les électrovannes (18) de mise en fonction/hors fonction et les électrovannes auxiliaires (26) de mise en fonction/hors fonction sont combinées, par paires, en une unique électrovanne (28) à quatre voies.

3. Suspension selon la revendication 1, caractérisée par le fait que le circuit pneumatique comprend au moins une paire de ressorts pneumatiques correspondants (12) de droite et de gauche ; une paire de conduits de bifurcation (17), communiquant avec les ressorts pneumatiques (12) et raccordés à un unique conduit principal (16) en vue de la liaison avec ladite alimentation (S) en air comprimé la suspension comportant, pour la paire de ressorts (12), une valve d'équilibrage (50) comprenant un premier raccord (54) relié au conduit principal (16), un deuxième raccord de sortie (56) et une paire de troisièmes raccords (58a, 58b) dont chacun est relié au conduit respectif de bifurcation (17), la valve d'équilibrage (50) présentant une première région (50a) pour moduler la pression régnant dans les troisièmes raccords (58a, 58b) en fonction de la charge imposée au véhicule, et une seconde région (50b) munie d'un siège (60) et d'un obturateur correspondant (62) pour autoriser, dans une première position, une communication entre les conduits de bifurcation (17) et la première région (50a) de l'électrovanne, et pour interrompre, dans une seconde position, la circulation d'air entre les troisièmes raccords (58a, 58b) et les premier et deuxième raccords (54, 56), en isolant simultanément l'un de l'autre les troisièmes raccords (58a, 58b).

4. Suspension selon la revendication 3, caractérisée par le fait que la seconde région (50b) de la valve d'équilibrage (50) présente, pour l'obturateur (62), un siège (60) qui est coaxial à une paroi cylindrique (68), avec des orifices (68a, 68b) espacés axialement et communiquant avec les conduits de bifurcation (17), l'obturateur (62) étant pourvu d'une partie annulaire (66) rendue étanche et destinée à prendre place entre les orifices (68a, 68b), dans la seconde position de l'obturateur (62), en vue d'isoler l'un de l'autre les conduits de bifurcation (17).

5. Suspension selon l'une quelconque des revendications précédentes, caractérisée par le fait que des moyens de commande, associés aux électrovannes de mise en fonction/hors fonction, renferment une minuterie (24) pour la neutralisation périodique des électrovannes (18, 26, 28, 32b, 50b) de mise en fonction/hors fonction, lorsque le véhicule est en mouvement.

FIG. 1

EP 0 354 438 B1

FIG. 2

FIG. 3

EP 0 354 438 B1

FIG. 4

FIG. 5